# EUROPEAN PATENT APPLICATION

(11) **EP 1 522 759 A2**
(43) Date of publication of application: **13.04.2005**
(21) Application number: 04256276.9
(22) Date of filing: 11.10.2004
(51) Int. Cl.: F16G 11/10

(54) **Clamping device**

(30) Priority: 10.10.2003 GB 0323839
(71) Applicant: SEAC LIMITED, Leicester, Leicestershire LE5 5LP (GB)
(72) Inventor: Buckley, David, Leicester LE5 5LP, Leicestershire (GB)
(74) Representative: Lord, Hilton David

(57) **Abstract**

A wire clamping device and a method of suspension of air conditioning units, signs, pipes or ducting, for instance, comprising said device is provided. The clamping device comprises at least one clamping means (9) which further comprises first gripping and second gripping surfaces (11,12) and a means for clamping a region of wire positioned between said surfaces (11,12). The wire may be positioned or removed from between the gripping surfaces (11,12) without the need to thread a free end of the wire between the surfaces.

## Description

The present invention relates to a device for clamping wire under tension, comprising at least one wire clamping means that prevents slippage of a region of the wire in an undesired direction, whilst allowing the region of wire to move freely in an opposing direction.

The present invention may be used in a broad range of applications that require wire to be clamped or held firmly in place. For instance, the present invention is particularly useful in the construction industry for suspending heating, ventilation, mechanical and electrical services or units from overhead structural members.

For a number of years, a rod and bracket system was used for suspending such services or units. However, such systems proved inflexible and heavy, as well difficult and time consuming to install.

GB 2322435, in the name of Gripple Limited, describes a method of suspending equipment from an overhead structural member comprising the use of wire and a locking device. One end of a length of wire can be attached in an appropriate way to an overhead structural member, from which the duct or pipe, for instance, is to be suspended. The other end of the length of wire, the free end, is then passed through a bore in the locking device, then around the duct or pipe, or through a fixing point such as a loop thereon. The free end is then passed back through a second bore on the locking device. The wire is then clamped in place.

The locking device comprises at least one wedging means for preventing withdrawal of the wire through the bore so that the duct or pipe is held firmly in place. The wedging means is positioned within the device alongside the bore through which the wire passes and is biased such that the wire is wedged against one side of the bore in a self-tightening manner when the wire is urged to move back through the bore, thus preventing slippage.

However, it is a requirement of this device and a number of other similar devices known in the art that a tool or setting key, such as an Allen key or other similar implement, is required for releasing the wire when adjusting the height of the suspended duct or pipe, as occurs frequently when installing the same. Therefore, if the height of the duct or pipe is set incorrectly in the first instance, then it is necessary to use an additional tool to adjust the height. This is highly inconvenient for the workers installing, servicing or maintaining the pipe or duct as an extra pair of hands may be required or the tool may be dropped or lost.

The Dyna-Tite™ device, produced by Duro Dyne, seeks to address this problem by providing a locking device comprising a number of bores and wedging means, similar to the device taught in the Gripple patent, but also comprising an aperture in the side of the device whereby the biased wedging means can be released directly, for instance, manually.

However, a common problem with the devices taught in the art is that the wire needs to be threaded through a bore or channel, which passes through the device. This is problematic for the operator as it can be difficult to thread the wire through both bores of the device, particularly if the wire is under load. Therefore, once the operator has passed the free end through the loop or attachment on the pipe or duct, for instance, he must then attempt to pass the free end of the wire back through the bore in the locking device, whist at the same time supporting the weight of the pipe or duct through the free end of the wire. This may be difficult and time consuming.

Furthermore, the operator or installer needs to have the free end of the wire available to him so the device cannot be installed or removed if a free end of wire is not available.

Accordingly, there is a need in the art for a wire clamping means that may, for instance, be used in suspending a pipe or duct from an overhead structural member, wherein the wire does not have to be threaded through a bore or channel within the device. Furthermore, there is also a need in the art for a wire-clamping device wherein the free end of the suspending wire is not required to be threaded in any way, such that the locking device can be suitably positioned on a region of wire where no free end is available. There exists a further need in the art for a wire-clamping device that combines at least one of these features with the benefit that no adjustment tool is required.

Accordingly, it is an object of the invention to overcome these deficiencies in the art by providing a wire clamping device that does not require threading with a free end of wire.

Furthermore, it is also an object of the present invention to provide a wire clamping means that does not require a tool or implement for adjustment. In particular, the present invention sets out to provide a wire clamping device that does not require a tool or implement to release the clamping force exerted on the wire by the device, thereby enabling the device, when in cooperation with the device, to be adjusted more easily.

Thus, in a first aspect, there is provided a device for clamping wire under tension, comprising at least one wire clamping means that prevents slippage of a region of the wire in an undesired direction, whilst allowing the region of wire to move freely in an opposing direction, characterised in that each wire clamping means comprises:
first gripping and second gripping surfaces and a means for clamping a region of wire positioned between said surfaces,
the wire being positionable, or removable, or both, from between the said surfaces, when both ends of the region are under tension such that no free end of the wire is available for threading or feeding between said gripping surfaces.

This is advantageous as it allows the device to be positioned, for instance, on a region of wire, and for that region of wire to be clamped by the clamping device, when the wire is under tension and no free end is available. For example, one end of the wire may already be attached to an overhead structural member, for instance, whilst the other end may be held by the operator or installer. The device according to the present invention may then be positioned on the wire by the operator or installer, such that it can clamp a region of the wire between first and second griping surfaces, without the need for a free end of the wire to be threaded through the device or between the gripping surfaces, in particular.

It is preferred that the means for clamping a region of wire is surface mounted on the device and, more preferably, that it also comprises a biasing means.

Preferably, the means for clamping a region of wire comprises a body pivoted for rotation to clamp the region of wire. Preferably, this body comprises an arm, although it is envisaged that the body may comprise a cam or other eccentrically mounted or pivoted means that may be used to clamp a region of wire.

In a further embodiment of the invention, there is provided a device for clamping wire under tension, comprising at least one wire clamping means that prevents slippage of a region of the wire in an undesired direction, whilst allowing the region of wire to move freely in an opposing direction, characterised in that each wire-clamping means comprises:
at least one biasedly-pivoted arm, the arm further comprising a first gripping surface; a base unit; a pivot; a biasing means; and an inclined second gripping surface;
the arm rotating around the pivot under bias to contact the wire with the first gripping surface;
the pivot and the arm being so positioned relative to the inclined second gripping surface, that when a force is applied to the wire so that the wire is urged to move in an undesired direction, the arm is also urged, through contact with the wire, to clamp the wire between the gripping surfaces in a self-tightening manner.

It is preferred that the clamping device comprises three, four or more, but most preferably two clamping means. It is also preferred that each clamping means clamps a different region of wire. Preferably, the clamped regions of wire are substantially parallel, at the point of clamping between the first and second gripping surfaces, to each other. Preferably, each clamping device further comprises a guiding means for ensuring optimal positioning of the wire.

It is also preferred that when the device comprises two or more clamping means and the base units form a single integral component. Preferably, the device also comprises at least one, and preferably two, further guiding means.

The wire clamping means may be positioned in any orientation with respect to each other, although it is preferred that they are positioned on the same face of the device. Even more preferably, the clamping means are positioned on opposing faces of the device.

In a preferred embodiment of the present invention, the device further comprises at least one further gripping surface, in addition to the first and second gripping surfaces. Preferably, the arm or the base unit, or both, may comprise any number of discrete gripping surfaces.

In a further aspect, there is provided a kit comprising one or more devices according to the present invention and wire to provide at least two regions of wire for clamping. Preferably, two of these regions of wire form part of a single continuous length of wire. Alternatively, it is also preferred that the kit comprising the device according to the present invention may clamp regions of wire from different or discrete lengths of wire.

It is also preferred that the wire comprises a loop or a fixing means for attachment to a structural member or other article, or both.

In a still further aspect of the present invention, there is provided a suspension method comprising the kit or device according to the present invention. Preferably, a continuous length of wire is passed around an overhead structure or member. Furthermore, it is preferred that the method according to the present invention may be used for suspending signs, lighting, ducting, air-conditioning units, ceilings or any other articles suitable for suspension by wire.

Alternatively, it is preferred that the clamping device is used to clamp, join or connect two or more discreet lengths of wire.

A further disadvantage of known suspension systems is that they are often supplied with pre-cut lengths of wire, requiring considerable preplanning by the user with regard to the length of wire required in each instance. Should the user unexpectedly have to vary the length of the wire in the suspension system, this may cause delay due to the supplied wire being too short, or can lead to an unnecessary wastage of wire, if the supplied wire is too long.

However, the present device is not so limited, and may be provided in a kit with either pre-cut lengths of wire, a continuous length of wire intended for use with several devices, or no wire at all.

The invention will now be described, by way of illustration only, with reference to the accompanying drawings in which:-
Figures 1 to 5 show a clamping device according to one embodiment of the present invention, comprising two clamping means. Figure 1 shows a clamping device with two regions of wire clamped in position;
Figure 2 shows how the biasedly-pivoted arm can be rotated back against the bias, so that the region of wire may be positioned between the gripping surfaces;
Figure 3 shows how a region of wire may be positioned between the first and second gripping surfaces and, furthermore, how it may be positioned relative to the guiding means;
Figure 4 is an exploded view of the same clamping device;
Figure 5 shows a method of suspending a pipe comprising a single continuous length of wire and a clamping device comprising two clamping means;
Figures 6, 7 and 8 show an alternative embodiment of the present invention. Figure 6 shows a device wherein two wire clamping means are present, each positioned on an opposing face of the device, in a back-to-back configuration;
Figure 7 shows the same device with two with two regions of wire clamped in position; and
Figure 8 shows an exploded view of this alternative embodiment.

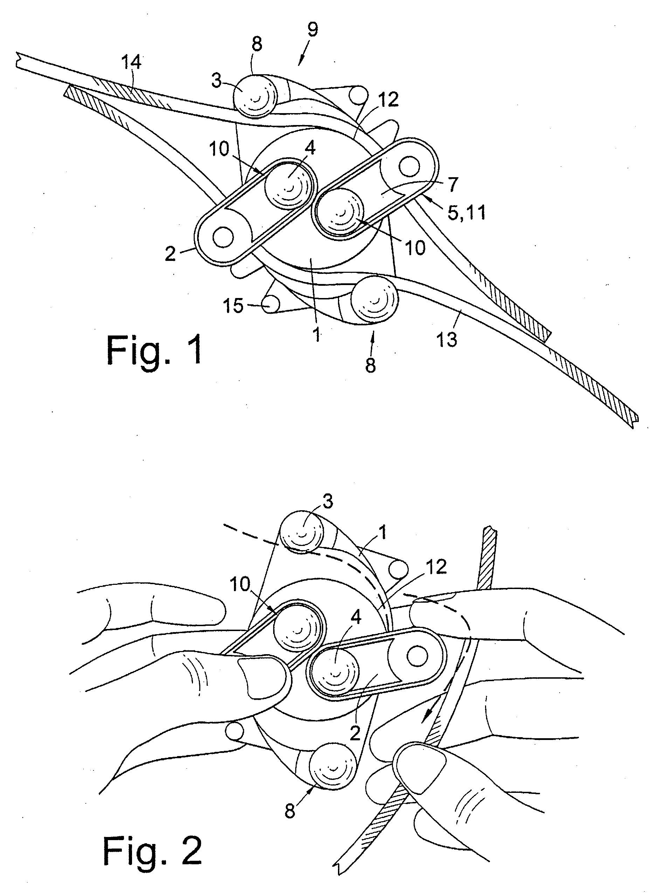

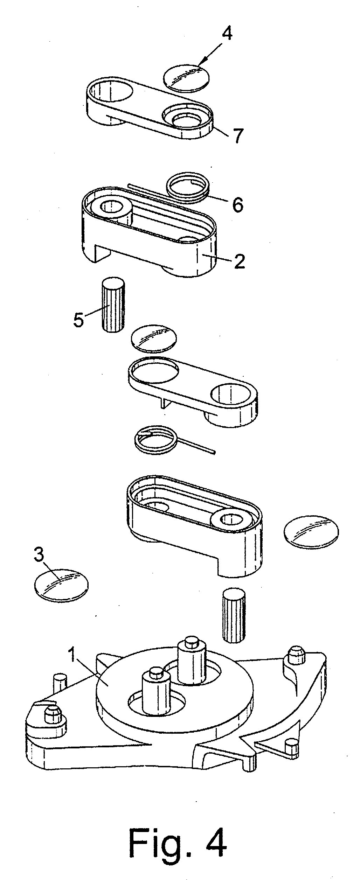

Figures 1-5 depict an embodiment of the present invention wherein the clamping device comprises two clamping means (9), and wherein each wire clamping means (9) comprises a base unit (1), and each base unit (1) of each clamping means (9) form an integral component. With reference to Figure 1, it can be seen that the first region of wire (13) is gripped between the first gripping surface (11) and the second gripping surface (12) and then contacts a guiding means (8). The guiding means (8) ensures that a first region of wire (13) remains in the correct position and, in particular, that the wire (13) makes sufficient contact with the second gripping surface (12). Furthermore, the guiding means (8) also ensures that the first region of wire (13) is positioned at an optimal angle for gripping between gripping surfaces (11) and (12).

The clamping device (9) comprises a clamping means (16). Each clamping means (16) further comprises a biasedly-pivoted arm (2), a base unit (1), a pivot (10), a biasing means (6) and an inclined second gripping surface (12).

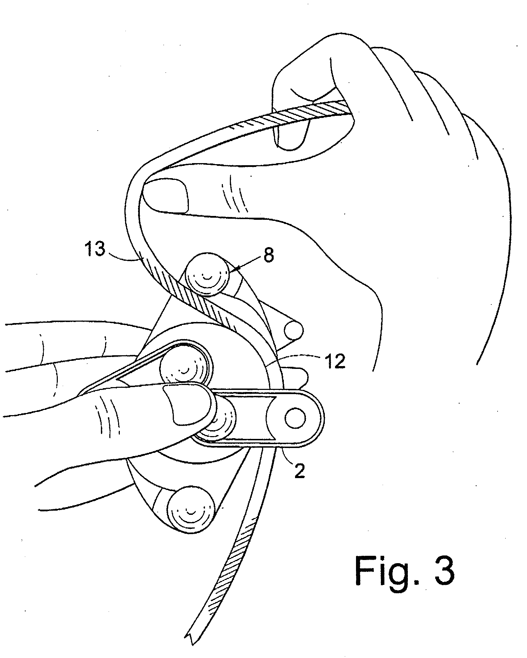

Figure 2 shows how the first region of wire (13) can be positioned relative to the clamping means (9). Whilst Figure 2 shows that this process can be done with two hands, it is also envisaged that this may be done with only a single hand, particularly if there is tension in the wire at the time. The arm (2) is moved back against the biasing force provided by the biasing means (6) so that a gap appears between the first gripping surface (11) and the second gripping surface (12). The first region of wire (13) is then aligned within this gap and the arm (2) is released so that the region of wire (13) is contacted between the first and second gripping surfaces. The first region of wire (13) is also engaged with the guiding means (8) which, as discussed above, ensures correct positioning of the wire as shown in Figure 3.

Any loose ends of wire may be tidied up through the use of the further guiding means (15).

When the clamping device is to be used in a method of suspension according to the present invention, then this may be achieved in the following, non-limiting manner. In this instance, it is preferable that a single continuous length of wire is used. The first end of this length of wire is attached in a suitable way to an overhead structural member, for instance, through attachment to an attachment point or through formation of a loop through which the second, free end is then passed. The second, free end is now suspended from the structural member.

The free end may then be passed under, around or through the duct, pipe or appropriate article for suspension, or through an attachment point, such as a loop, thereon. The free end is then available for clamping with the clamping means. The clamping device may now be positioned on the first region of wire hanging between the overhead member and the duct or pipe. Alternatively, the clamping device may be positioned on said first region before the free end of the wire is contacted with the duct or pipe. In any event, when the clamping device is correctly positioned on the first region of wire hanging between the structural member and the duct or pipe, then the free end of the wire, comprising a second region of wire, may be correctly positioned in a further clamping means on the same clamping device.

Whilst it is envisaged that the free end of the wire may be clamped by a clamping means on a further clamping device, in a daisy-chain arrangement, this is not particularly preferred. Furthermore, the skilled person would understand that the steps of the process described above can be reordered provided that the end result is that the length of wire is suspended from an overhead structural member, the first region of the wire is then clamped by a first clamping means in the clamping device, the wire then contacting or attaching to the pipe or duct as appropriate, and finally a second region of wire being clamped by a second clamping means in the same clamping device.

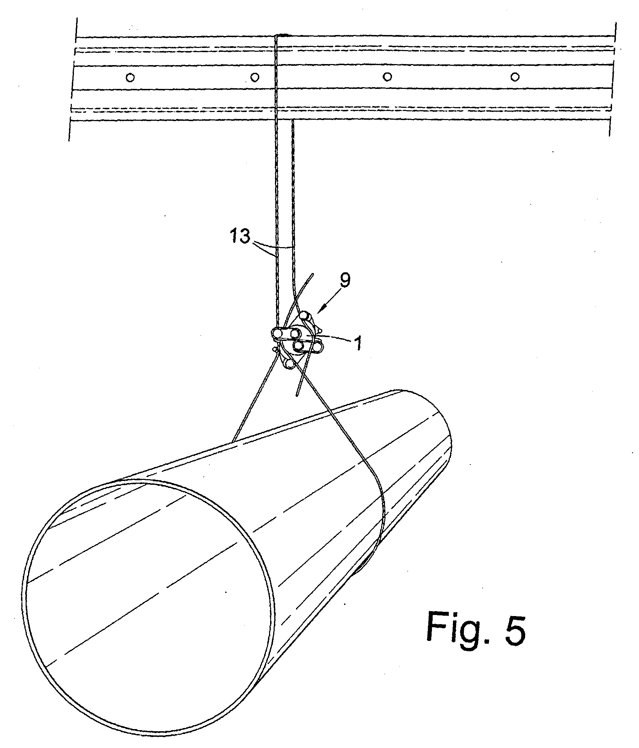

Figure 5 shows an alternative method of suspending an object. It can be seen from this figure that the wire is passed over the overhead structural member, one end being gripped by a first means for clamping a region of wire, the other end passing through a guiding means and then around the pipe, before being gripped by a second means for clamping a region of wire.

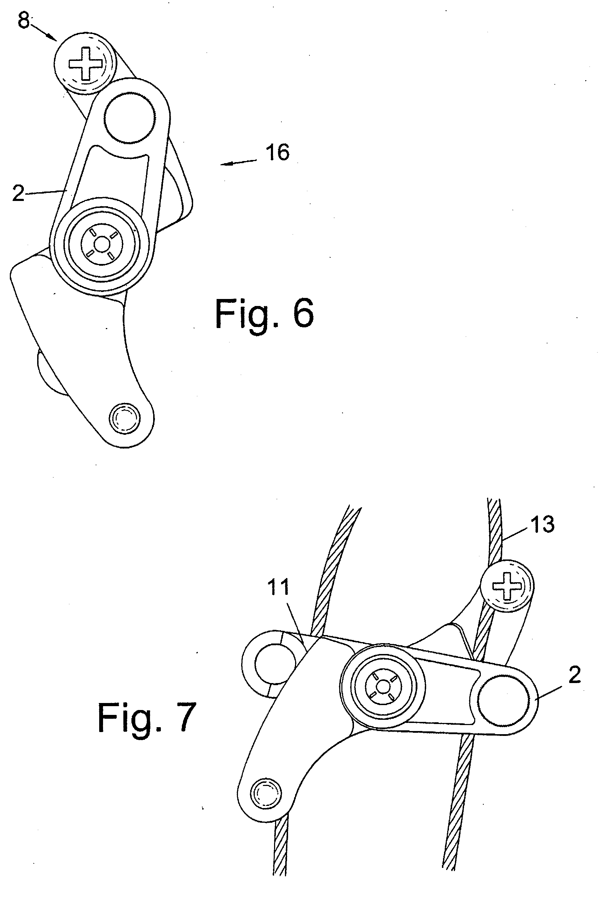

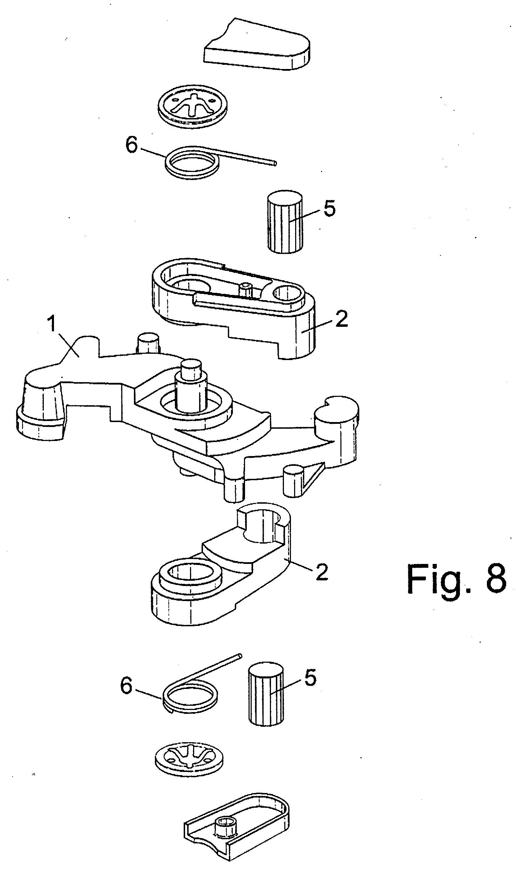

Figures 6, 7 and 8 show a preferred embodiment of the present invention., wherein the wire clamping means are positioned on opposing faces of the device, in a back-to-back configuration. The skilled person would understand that the embodiments of the present invention shown in the figures work in a similar manner. However, the embodiment shown in Figures 6, 7 and 8 is particularly preferred when a smaller, less obtrusive device is required.

The clamping device may be used to clamp discreet or separate lengths of wire whereby one end of a first length of wire is attached to an overhead structural member, and a second end is attached to a first attachment point on a duct, for instance. A second length of wire may then be attached to a second attachment point on the duct. The duct may then be suspended by positioning the clamping device to clamp both lengths of wire. This procedure may be repeated with a number of discrete or separate lengths of wire.

It is also envisaged that a loop of wire can be created between the first and second clamping means in the same clamping device and a pipe or duct subsequently passed through the loop.

Furthermore, it is also envisaged that, should the operator so wish, that the position of the wire through either the first or the second clamping means, or both, can be adjusted so as to raise or lower the pipe or duct or to free up more wire at the free end, for instance.

Although reference is made to a structural member, any suitable attachment point may be used. For instance, suitable attachment points may include lintels, purlins, beams, girders, chains, ropes, cords, or any other member or article considered by the skilled person to be suitable.

The clamping device according to the present invention may be used in a method of suspension for a number of different articles, services or units such as trunking, ventilation equipment, ducting, heating equipment, water tanks, lighting, signs, ceilings, lintels, beams or girders as appropriate. Accordingly, although reference is made herein to the term "pipe or duct", it is not envisaged that the invention is limited thereto, but that any appropriate article, for instance those listed above, may be suspended.

Furthermore, the clamping device according to the present invention may also be used to clamp two or more lengths of wire together or may even be used in a method of clamping wire that does not involve a method of suspension as described herein, for instance, a method of tying an article to a post with wire, for instance, in a horizontal manner. These lengths may be separate or may form a single stretch of wire. Therefore, it is also envisaged that the present invention may be used to join, tie or connect two or more lengths of wire together. For instance, the user may find that a length of wire is too short for his purpose and, therefore, may wish to use the device according to the present invention to connect a further length of wire to the first.

According to an aspect of the present invention, when the region of wire is under tension in the undesired direction, the first and second gripping means, already contacting the wire under the bias of the arm, grip the wire in a self-tightening manner. This is due the positioning of the arm and the pivot, and the inclined nature of the second gripping surface. It is preferred that contact between the wire and the first and second gripping surfaces draws the arm, which may be aided by the biasing means, to contact and grip the wire with increasing force. Preferably, the first gripping surface cannot pass over or clear the second gripping surface in any way. Therefore, the wire is gripped ever more tightly.

Furthermore, the greater the force on the wire urging the wire to slip through the clamping means and hence in an undesired direction, the greater the force with which the wire is clamped. In this way, the clamping means is self-tightening.

The undesired direction of movement of the wire is that which would allow the suspended pipe or duct, for instance, to be lowered, rather than held in place.

However, if the operator wishes to adjust the height of the pipe or duct, for instance, or wishes to pass more wire through the clamping means in a direction opposing the above-mentioned undesired direction, then this may be easily achieved through urging the wire in said opposing direction through the clamping means or by simply moving the arm back against its biasing force, thus releasing the grip on the wire.

Furthermore, if the operator wishes to pass more wire through the clamping means in the undesired direction, then by forcing the arm back against its biasing force, the grip on the wire is released and the wire may be fed through as appropriate. However, once the releasing force on the arm is removed the arm, under bias, will contact the wire again and grip the wire in a self-tightening manner between the first and second gripping surfaces.

The angle of the inclined second gripping surface at the point of clamping is preferably between 1 and 60 degrees, but more preferably between 5 and 25 degrees from an axis perpendicular to the axis of he arm, with the proviso that the incline is towards the arm and not away from it, as the latter may not lead to an effective clamping mechanism, as would be understood by the skilled person. It can be seen from Figure 3, for instance, that the second gripping surface, although it subsequently curves away, is inclined towards the arm at the point of clamping.

It is also envisaged that the clamping device is not limited to clamping wire, but may be used to clamp rope, cord, string of other suitable materials known in the art. Furthermore, it is envisaged that any diameter of the wire or other material may be used, if deemed appropriate by the skilled person.

The gripping surface may be smooth, but it is preferred that the surface of the gripping surface is rough, uneven, bevelled, notched or arranged in such a way as to provide an appropriate degree of grip so as to prevent slippage of the wire through the clamping means in an undesired direction when under tension.

If the intended use of the clamping device requires that said device comprises more than one clamping means, then the relative positions of the claming means may be set, according to the intended use. It is preferred, for instance, that in the case where the clamping device is for use in a method of suspension according to the present invention, thus requiring 2 or more clamping means, that the clamping means are placed close together, such that the axis between the pivots of the two clamping means is roughly parallel to the wire at the clamping position, and that the arms themselves are substantially parallel, as can be seen from the Figures.

It is envisaged that the clamping device may comprise a mounting bracket or a suitable connection or attachment point or means, so that the device, may, for instance, be mounted on a solid surface or directly suspended from a structural member, if the need arises, although a suitable arrangement of clamping devices may be required. Such a mounting bracket may be particularly useful when only one clamping means is required.

It is also envisaged that the clamping device may be enclosed in a case or cover, although this is not preferred as this may affect the ability of the operator to position the clamping device on the wire without the need for threading free end of wire through the clamping means. However, suitable arrangements may be made by the skilled person to overcome this.

The device may be designed by the skilled person to be able to operate safely under a variety of loads. Only a simple experiment may be necessary to determine the load bearing capacity of a device. This may be in the region of 5, 10, 20, 50, 100, 200kg or greater.

Various safe working ratios are envisaged for the device. For instance, ratios of 1: 1, 1:2, 1:4, 1:5, 1:8, 1:10, 1:20, 1:50 or even 1:100 may be used

It will be understood that the illustrated embodiments described herein show an application of the invention in one form only for the purposes of illustration. In practice, the invention may be applied to many different configurations the detailed embodiments being straightforward to those skilled in the art to implement.

## Claims

1. A device for clamping wire under tension, comprising at least one wire clamping means that prevents slippage of a region of the wire in an undesired direction, whilst allowing the region of wire to move freely in an opposing direction, **characterised in that** each wire clamping means comprises:
first gripping and second gripping surfaces and a means for clamping a region of wire positioned between said surfaces,
the wire being positionable, or removable, or both, from between the said surfaces, when both ends of the region are under tension such that no free end of the wire is available for threading or feeding between said gripping surfaces.

2. A device according to claim 1 wherein the means for clamping a region of wire is surface-mounted on the device.

3. A device according to claim 1 or 2, wherein the means for clamping a region of wire comprises a body pivoted for rotation to clamp the region of wire.

4. A device according to claim 3, wherein the body comprises an arm.

5. A device according to any preceding claim, wherein the clamping means further comprises a biasing means.

6. A device according to claim 5, wherein:
- the arm is biasedly-pivoted and further comprises the first gripping surface;
- the wire clamping means further comprising:
- a base unit;
- a pivot; and
- an inclined second gripping surface;
the arm rotating around the pivot under bias to contact the wire with the first gripping surface,
the pivot and the arm being so positioned relative to the inclined second griping surface, that when a force is applied to the wire so that the wire is urged to move in the undesired direction, the arm is also urged, through contact with the wire, to clamp the wire between the gripping surfaces in a self-tightening manner.

7. A device according to any of claims 1-6, comprising two wire clamping means.

8. A device according to claim 7, wherein the wire clamping means are positioned on opposing faces of the device.

9. A device according to claim 7, wherein the wire clamping means are positioned on the same face of the device.

10. A kit comprising a device according to any preceding claim and at least one length of wire.

11. A kit according to claim 10, wherein two regions of wire form part of a single continuous length of wire.

12. A kit according to claim 11, wherein one end of the wire comprises a loop or a fixing means for attachment to a structural member or other article, or both.

13. A suspension method comprising the use of a device according to claims 1-9 or a kit according to claims 10-12.

14. A method according to claim 13, wherein the continuous length of wire is passed around an overhead structural member.

15. A method according to claims 13 or 14, for suspending trunking, ventilation equipment, ducting, heating equipment, water tanks, lighting signs, ceilings, lintels, beams or girders.
